# FASCICULE DE BREVET EUROPEEN

(11) **EP 3 880 044 B1**
(45) Date de publication et mention de la délivrance du brevet: **30.07.2025**
(21) Numéro de dépôt: 19801343.5
(22) Date de dépôt: 12.11.2019
(51) Int. Cl.: A47J 37/06

(54) **APPAREIL DE CUISSON DU TYPE FRITEUSE A AIR CHAUD MUNI D'UNE ENTREE D'AIR FRAIS ET D'UNE SORTIE D'AIR CHAUD OPTIMISEES**
HEISSLUFTFRITTIERGERÄT MIT OPTIMIERTEM FRISCHLUFTEINLASS UND OPTIMIERTEM HEISSLUFTAUSLASS
HOT-AIR FRYER COOKING APPLIANCE PROVIDED WITH AN OPTIMISED FRESH AIR INLET AN OPTIMISED HOT AIR OUTLET

(30) Priorité: 15.11.2018 FR 1860566
(43) Date de publication de la demande: 22.09.2021
(73) Titulaire: SEB S.A., 69130 Ecully (FR)
(72) Inventeur: PRIETO, Guillaume, 21380 MARSANNAY LE BOIS (FR); CORNU, Jérémy, 69007 LYON (FR)
(74) Mandataire: SEB Développement
(86) Numéro de dépôt international: PCT/EP2019/080928
(87) Numéro de publication internationale: WO 2020/099355

(56) Documents cités:
- WO-A1-2015/028940
- WO-A1-2015/028940
- CN-U- 204 427 801
- CN-U- 204 427 801
- CN-U- 206 499 378
- CN-U- 206 499 378

## Description

### Domaine technique

La présente invention concerne les appareils de cuisson, plus précisément les friteuses à air chaud permettant de réaliser une cuisson des aliments en utilisant très peu d'huile, voire pas du tout d'huile.

L'invention porte tout particulièrement sur de telles friteuses à air chaud qui comprennent un dispositif de circulation d'air muni de moyens d'aspiration d'air frais, de moyens d'extraction d'air chaud et d'une grille agencée sur une paroi extérieure d'une coque de l'appareil, au travers de laquelle circule l'air.

Un principal objectif de l'invention est d'optimiser la conception du dispositif de circulation de l'air sur l'appareil.

### Etat de la technique

Les appareils de cuisson du type friteuse à air chaud sont connus de l'homme du métier. De tels appareils de cuisson permettent de réduire fortement la quantité de matière grasse, voire de la supprimer complètement, pendant la cuisson des aliments qui peuvent être d'origine végétale ou animale, par exemple des frites, des légumes, de la viande ou du poisson. En effet, la cuisson s'effectue avec peu ou pas d'huile grâce à de l'air chaud circulant dans une chambre de cuisson, ce qui permet de consommer des aliments plus diététiques tout en conservant des propriétés organoleptiques satisfaisantes pour l'utilisateur.

Un tel appareil de cuisson comprend généralement une coque et une cuve ; la cuve reçoit un panier dans lequel sont disposés des aliments à cuire. Une fois les aliments disposés dans le panier et celui-ci positionné dans la cuve, la coque de l'appareil de cuisson peut être fermée pour former une enceinte de cuisson incorporant la cuve, le panier et les aliments. De l'air chaud est ensuite pulsé dans cette enceinte de cuisson au moyen d'un dispositif de chauffe et d'un dispositif de circulation d'air, la circulation de l'air chaud assurant ainsi la cuisson des aliments.

Le dispositif de circulation d'air comprend des moyens d'aspiration d'air frais et des moyens d'extraction d'air chaud. Les moyens d'aspiration d'air frais comportent une entrée d'air frais agencée sur une paroi extérieure de la coque de l'appareil de cuisson, lesdits moyens d'aspiration étant configurés pour acheminer l'air de l'entrée jusqu'à l'enceinte de cuisson en passant par le dispositif de chauffe. La circulation de l'air frais dans l'appareil de cuisson, jusqu'au dispositif de chauffe, permet également le refroidissement de cet appareil. Les moyens d'extraction comportent une sortie d'air chaud agencée sur la paroi extérieure de la coque, lesdits moyens d'extraction étant configurés pour évacuer l'air de l'enceinte de cuisson.

Traditionnellement, l'entrée d'air frais et la sortie d'air chaud sur la paroi extérieure de la coque de l'appareil de cuisson sont revêtues d'une grille. Lorsque l'entrée et la sortie sont distantes sur la paroi extérieure de la coque, deux grilles distinctes sont présentes sur la coque, ce qui peut nuire à l'esthétisme d'ensemble de l'appareil de cuisson.

Il est également connu un appareil de cuisson décrit dans le modèle d'utilité chinois CN206499378U, qui prévoit une sortie d'air chaud constituée d'une ouverture sur la paroi extérieure de la coque et une entrée d'air frais constituée de perforations sur ladite paroi extérieure, ces perforations étant positionnées autour de l'ouverture. En outre une grille de grandes dimensions revêt à la fois l'ouverture et les perforations et est donc traversée à la fois par de l'air frais pénétrant dans l'appareil de cuisson et par de l'air chaud évacué de l'enceinte de cuisson. Les dimensions de la grille nuisent également à l'esthétisme général de l'appareil de cuisson. Par ailleurs, cette grille est conçue dans un matériau résistant à haute température du fait qu'elle est traversée en partie - dans la zone de la sortie d'air - par de l'air chaud extrait de l'enceinte de cuisson. Un tel matériau résistant à haute température, par exemple de l'acier ou du plastique résistant à la chaleur, est plus coûteux qu'un matériau standard ; les grandes dimensions de la grille augmentent donc le coût de l'appareil de cuisson.

### Exposé de l'invention

L'appareil de cuisson du type friteuse à air chaud selon l'invention pallie les inconvénients précités. A ce titre, l'appareil comprend une coque munie d'une paroi extérieure, une enceinte de cuisson agencée à l'intérieur de la coque, un dispositif de circulation d'air et un dispositif de chauffe de l'air. Le dispositif de circulation d'air comprend des moyens d'aspiration qui comportent une entrée d'air frais agencée sur la paroi extérieure de la coque, lesdits moyens d'aspiration étant configurés pour acheminer l'air de l'entrée jusqu'à l'enceinte de cuisson en passant par le dispositif de chauffe. En outre, le dispositif de circulation d'air comprend des moyens d'extraction qui comportent une sortie d'air chaud agencée sur la paroi extérieure de la coque et munie d'une grille, lesdits moyens d'extraction étant configurés pour évacuer l'air de l'enceinte de cuisson en passant au travers de ladite grille. De manière remarquable, l'entrée d'air est formée par un passage ménagé entre la paroi extérieure de la coque et la grille de la sortie d'air. En outre, la grille est plaquée contre la paroi extérieure ou disposée à fleur de la paroi extérieure, ladite paroi extérieure comportant au moins une cavité sur laquelle débouche l'entrée d'air, ladite au moins une cavité débordant du contour de ladite grille de sorte à définir ledit passage.

Ainsi, l'appareil de cuisson selon l'invention prévoit avantageusement la présence d'une seule grille dédiée spécifiquement à l'évacuation de l'air chaud extrait de l'enceinte de cuisson, l'entrée de l'air frais se faisant par le passage autour de cette grille. Cela permet de réduire les dimensions de la grille qui est conçue dans un matériau résistant à haute température ; le coût de cette grille est donc plus faible. Le passage entre la paroi extérieure de la coque et le contour de la grille reste avantageusement discret ; cette discrétion du passage et la réduction de taille de la grille améliorent considérablement l'esthétisme d'ensemble de l'appareil de cuisson. L'aspiration d'air frais et l'extraction d'air chaud s'effectuent avantageusement sur une même zone de la paroi extérieure de la coque en créant une barrière d'air froid canalisant le flux d'air chaud extrait, ce qui évite de chauffer la paroi extérieure de la coque autour de la sortie d'air chaud.

Selon une réalisation de l'appareil, le passage est ménagé au moins entre des côtés latéraux de la grille de la sortie d'air et la paroi extérieure. Selon une autre réalisation, le passage est ménagé au moins entre un côté inférieur de la grille de la sortie d'air et la paroi extérieure. Selon une réalisation préférentielle, afin d'optimiser le débit d'air frais entrant, le passage est ménagé entre des côtés latéraux de la grille de la sortie d'air et la paroi extérieure et entre un côté inférieur de la grille de la sortie d'air et ladite paroi extérieure.

Selon une réalisation de l'appareil, la grille comporte des déflecteurs orientés de manière à évacuer l'air à l'extérieur de la coque selon une trajectoire inclinée vers le haut. Cela permet d'éloigner au mieux l'air chaud de l'entrée d'air disposée autour de la grille et de dissiper plus rapidement l'air chaud dans l'environnement ambiant.

Selon l'invention la grille est plaquée contre la paroi extérieure ou disposée à fleur de la paroi extérieure, ce qui permet à la grille de se fondre dans le plan cette paroi extérieure. En outre, la paroi extérieure comporte au moins une cavité sur laquelle débouche l'entrée d'air, ladite au moins une cavité débordant du contour de ladite grille de sorte à définir ledit passage. Ainsi, l'entrée d'air est dissimulée par la grille bien que l'air frais ne passe pas au travers de cette grille, seul apparaissant discrètement le pourtour de la cavité à la périphérie de la grille. Des variantes de réalisation sont envisageables dans le cadre de l'invention, sans cavité sur la paroi extérieure de la coque et en déportant légèrement vers l'extérieur la grille par rapport à ladite paroi extérieure. Selon une réalisation de l'appareil, la grille présente une forme de parallélogramme, de préférence rectangulaire. Des variantes de réalisation sont envisageables dans le cadre de l'invention, par exemple une grille circulaire ou ovale.

Selon une réalisation de l'appareil, la coque comprend une paroi arrière sur laquelle sont aménagées l'entrée d'air et la sortie d'air. Leur aménagement sur une autre face de la coque reste envisageable dans le cadre de l'invention. Selon l'appareil objet de l'invention, la grille est réalisée dans un matériau résistant à haute température, de préférence en acier. D'autres matériaux que l'acier peuvent être envisagés, notamment des plastiques résistants à haute température.

### Brève description des figures

Les caractéristiques et avantages de l'invention apparaîtront à la lecture de la description suivante s'appuyant sur des figures, parmi lesquelles :
La figure 1 est une vue montrant un appareil de cuisson du type friteuse à air chaud en mettant en évidence la partie arrière de cet appareil sur laquelle est aménagée la grille ;
La figure 2 est une vue montrant en coupe l'intérieur d'un appareil de cuisson afin de mettre en évidence la conception d'un tel appareil ;
La figure 3 est une vue montrant la grille fixée sur la paroi extérieure de la coque et laissant apparaître une cavité sur la paroi extérieure, autour de cette grille ;
La figure 4 est une vue montrant la présence de déflecteurs sur la grille.

### Description détaillée de l'invention

Dans la suite de la description, l'appareil 1 de cuisson est constitué d'un exemple de friteuse à air chaud, d'autres conceptions de friteuses à air chaud existant et pouvant également comporter les caractéristiques essentielles objets de la présente invention qui vont être détaillées ci-après.

Dans la suite de la description, le terme friteuse sera utilisé pour dénommer l'appareil de cuisson, sauf indication dans le texte.

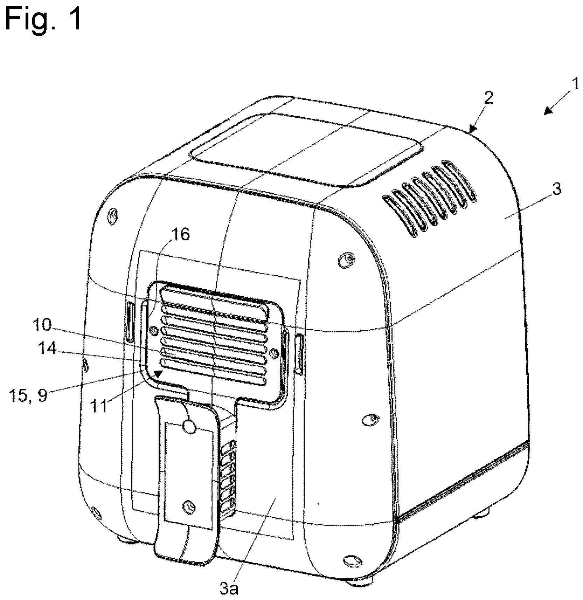

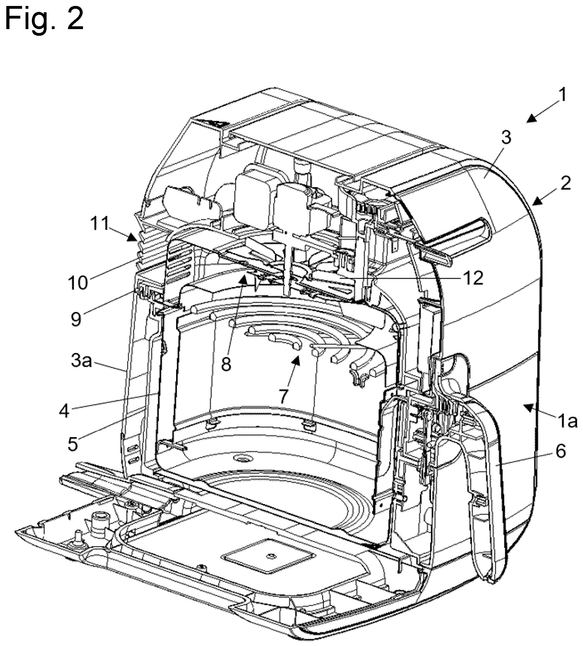

Comme illustré sur la figure 1, la friteuse 1 comprend une coque 2 comportant une paroi extérieure 3 munie d'une paroi arrière 3a opposée à une face avant 1a de cette friteuse 1. Cette face avant 1a permet l'insertion d'une cuve 4 à la manière d'un tiroir dans une enceinte de cuisson 5 agencée à l'intérieur de la coque 2, ladite cuve 4 étant manipulée au moyen d'une poignée de manipulation 6. Un dispositif de chauffe 7 est agencé à l'intérieur de la coque 2, au-dessus de l'enceinte de cuisson 5. Comme illustré sur les figures 1 à 3, un dispositif de circulation d'air 8 permet d'aspirer de l'air frais au travers d'une entrée d'air 9 qui est agencée sur la paroi arrière 3a, cet air frais est acheminé vers le dispositif de chauffe 7 afin d'être chauffé puis, une fois chauffé, vers l'enceinte de cuisson 5. L'air chaud est ensuite refoulé à l'extérieur de la friteuse 1, par une sortie d'air 10 aménagée sur cette paroi arrière 3a et comportant une grille 11. Le dispositif de circulation d'air 8 comprend un ventilateur 12 permettant d'acheminer l'air de l'entrée d'air 9 jusqu'à la sortie d'air 10. Les divers organes électriques de la friteuse 1, dont notamment le dispositif de chauffe 7 et le ventilateur 12, sont raccordés à un circuit d'alimentation électrique. Ces caractéristiques générales sont connues sur les friteuses à air chaud actuellement sur le marché, raisons pour lesquelles elles ne seront pas détaillées ; l'homme du métier pourra par exemple se référer aux friteuses à air chaud développées par la demanderesse, par exemple celle commercialisée sous la dénomination FRY DELIGHT^{®}. Tel que précité, la friteuse 1 illustrée en figure 1 et 2 est du type à tiroir, mais il est possible de mettre en œuvre l'invention sur d'autres conceptions de friteuses à air chaud, notamment celles du type à couvercle, comme par exemple celles commercialisées par la demanderesse sous la dénomination ACTIFRY ^{®}.

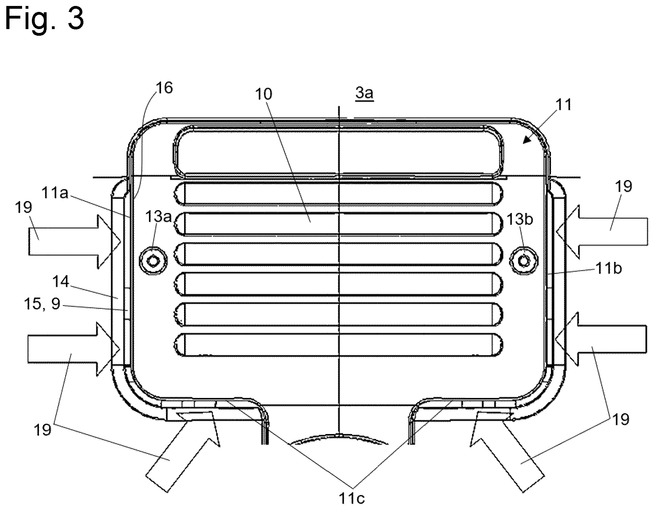

Comme illustré sur les figures 1 et 3, la grille 11 comprend une forme rectangulaire avec deux côtés latéraux 11a, 11b et un côté inférieur 11c. Cette grille 11 est disposée à fleur de la paroi arrière 3a sur laquelle elle est fixée au moyen de deux vis 13a, 13b. La paroi arrière 3a comprend une cavité 14 sur laquelle débouche l'entrée d'air 9 ; cette cavité 14 déborde des côtés latéraux 11a, 11b et du côté inférieur 11c de la grille 11, ce qui permet de laisser un passage 15 discret entre la paroi arrière 3a et le contour 16 de la grille 11, ce passage 15 définissant l'entrée d'air 9 sur la paroi arrière 3a. Ainsi, l'air pénètre frais par le passage 15 autour de la grille 11 puis ressort chaud par la grille 11 en fin de cycle de circulation d'air. La grille 11 est réalisée en acier, matériau offrant une très bonne résistance à haute température, l'utilisation d'autres matériaux résistants à haute température restant envisageable.

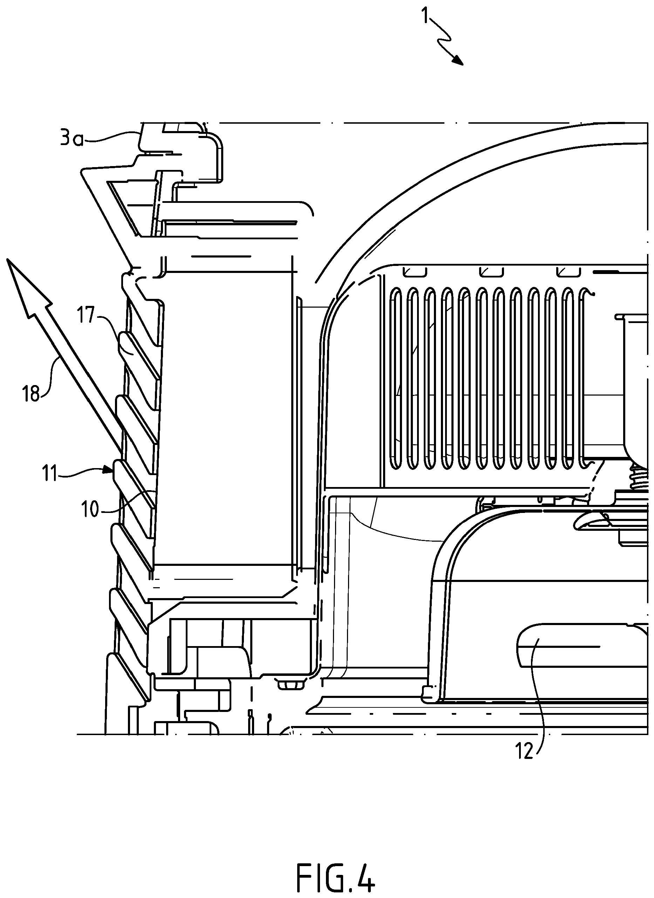

Comme illustré sur la figure 4, la grille 11 comprend des déflecteurs 17 qui sont inclinés de manière à orienter le flux d'air chaud sortant vers le haut, comme l'illustre la flèche 18, ce qui permet d'éloigner au plus vite et au mieux cet air chaud vers le haut dans l'environnement ambiant, à distance du passage 15 autour de la grille 11 par lequel pénètre l'air frais. Cela évite que l'air chaud réchauffe l'air frais entrant dans la friteuse 1 et participant au refroidissement des composants de l'appareil avant que cet air soit chauffé par le dispositif de chauffe pour la cuisson des aliments dans l'enceinte de cuisson 5. La présence du passage 15 autour des côtés latéraux 11a, 11b et du côté inférieur 11c de la grille 11 permet également de créer un flux d'air frais autour de la grille 11, comme le schématisent les flèches 19 sur la figure 3, ce qui permet de canaliser le flux d'air chaud sortant pour éviter que cet air chaud réchauffe la paroi arrière 3a de la coque 2.

Sur le mode de réalisation décrit ci-avant, l'entrée d'air 9 et la sortie d'air 10 sont disposées sur la paroi arrière 3a de la coque 2 ; celles-ci pourraient être positionnées sur une autre face de la paroi extérieure 3 de la coque 2.

## Revendications

1. Appareil (1) de cuisson du type friteuse à air chaud, comprenant une coque (2) munie d'une paroi extérieure (3), une enceinte de cuisson (5) agencée à l'intérieur de la coque et un dispositif de circulation d'air (8) comprenant :
- des moyens d'aspiration comportant une entrée d'air (9) frais agencée sur la paroi extérieure de la coque, lesdits moyens d'aspiration étant configurés pour acheminer l'air de l'entrée jusqu'à l'enceinte de cuisson en passant par un dispositif de chauffe (7) et,
- des moyens d'extraction comportant une sortie d'air (10) chaud agencée sur la paroi extérieure de la coque et munie d'une grille (11), lesdits moyens d'extraction étant configurés pour évacuer l'air de l'enceinte de cuisson en passant au travers de ladite grille,
l'entrée d'air (9) étant formée par un passage (15) ménagé entre la paroi extérieure (3) de la coque (2) et la grille (11) de la sortie d'air (10),
ledit appareil (1) étant **caractérisé en ce que** la grille (11) est plaquée contre la paroi extérieure (3) ou disposée à fleur de la paroi extérieure (3), ladite paroi extérieure comportant au moins une cavité (14) sur laquelle débouche l'entrée d'air (9), ladite au moins une cavité débordant du contour (16) de ladite grille (11) de sorte à définir ledit passage (15).

2. Appareil (1) selon la revendication 1, dans lequel le passage (15) est ménagé au moins entre des côtés latéraux (11a, 11b) de la grille (11) de la sortie d'air (10) et la paroi extérieure (3).

3. Appareil (1) selon l'une quelconque des revendications 1 ou 2, dans lequel le passage (15) est ménagé au moins entre un côté inférieur (11c) de la grille (11) de la sortie d'air (10) et la paroi extérieure (3).

4. Appareil (1) selon l'une quelconque des revendications 1 à 3, dans lequel la grille (11) comporte des déflecteurs (17) orientés de manière à évacuer l'air à l'extérieur de la coque (2) selon une trajectoire inclinée vers le haut.

5. Appareil (1) selon l'une quelconque des revendications 1 à 4, dans lequel la grille (11) présente une forme de parallélogramme, de préférence rectangulaire.

6. Appareil (1) selon l'une quelconque des revendications 1 à 5, dans lequel la coque (2) comprend une paroi arrière (3a) sur laquelle sont aménagées l'entrée d'air (9) et la sortie d'air (10).

7. Appareil (1) selon l'une quelconque des revendications 1 à 6, dans lequel la grille (11) est réalisée dans un matériau résistant à haute température, de préférence en acier.

## Patentansprüche

1. Kochgerät (1) vom Typ Heißluftfritteuse, umfassend eine Schale (2), die mit einer Außenwand (3) versehen ist, eine im Inneren der Schale angeordnete Kochkammer (5) und eine Luftzirkulationsvorrichtung (8), umfassend:
- Ansaugmittel, die einen an der Außenwand der Schale angeordneten Frischlufteinlass (9) umfassen, wobei die Ansaugmittel dazu konfiguriert sind, um die Luft vom Einlass über eine Heizvorrichtung (7) bis zur Kochkammer zu leiten, und
- Absaugmittel, die einen Heißluftauslass (10) umfassen, der an der Außenwand der Schale angeordnet und mit einem Gitter (11) versehen ist, wobei die Absaugmittel konfiguriert sind, um die Luft aus der Kochkammer durch das Gitter abzuleiten,
wobei der Lufteinlass (9) durch einen zwischen der Außenwand (3) der Schale (2) und dem Gitter (11) des Luftauslasses (10) eingerichteten Durchgang (15) gebildet ist,
wobei das Gerät (1) **dadurch gekennzeichnet ist, dass** das Gitter (11) gegen die Außenwand (3) gedrückt oder bündig mit der Außenwand (3) angeordnet ist, wobei die Außenwand mindestens einen Hohlraum (14) umfasst, in den der Lufteinlass (9) mündet, wobei der mindestens eine Hohlraum über die Kontur (16) des Gitters (11) hinausragt, so dass der Durchgang (15) begrenzt wird.

2. Gerät (1) nach Anspruch 1, wobei der Durchgang (15) mindestens zwischen lateralen Seiten (11a, 11b) des Gitters (11) des Luftauslasses (10) und der Außenwand (3) eingerichtet ist.

3. Gerät (1) nach einem der Ansprüche 1 oder 2, wobei der Durchgang (15) mindestens zwischen einer Unterseite (11c) des Gitters (11) des Luftauslasses (10) und der Außenwand (3) eingerichtet ist.

4. Gerät (1) nach einem der Ansprüche 1 bis 3, wobei das Gitter (11) Deflektoren (17) umfasst, die so ausgerichtet sind, dass sie die Luft nach außen aus der Schale (2) in einer aufwärts geneigten Trajektorie ableiten.

5. Gerät (1) nach einem der Ansprüche 1 bis 4, wobei das Gitter (11) eine parallelogrammförmige, vorzugsweise rechteckige Form aufweist.

6. Gerät (1) nach einem der Ansprüche 1 bis 5, wobei die Schale (2) eine rückseitige Wand (3a) umfasst, an welcher der Lufteinlass (9) und der Luftauslass (10) eingerichtet sind.

7. Gerät (1) nach einem der Ansprüche 1 bis 6, wobei das Gitter (11) aus einem hochtemperaturbeständigen Material, vorzugsweise aus Stahl, ausgeführt ist.

## Claims

1. Hot-air fryer cooking appliance (1), comprising a casing (2) provided with an outer wall (3), a cooking chamber (5) arranged inside the casing and an air circulation device (8) comprising:
- suction means comprising a fresh air inlet (9) arranged on the outer wall of the casing, said suction means being configured to convey the air from the inlet to the cooking chamber, passing via a heating device (7) and,
- extraction means comprising a hot air outlet (10) arranged on the outer wall of the casing and provided with a grille (11), said extraction means being configured to evacuate the air from the cooking chamber passing through said grille,
the air inlet (9) being formed by a passage (15) provided between the outer wall (3) of the casing (2) and the grille (11) of the air outlet (10),
said appliance (1) being **characterised in that** the grille (11) is flattened against the outer wall (3) or disposed flush against the outer wall (3), said outer wall comprising at least one cavity (14) onto which the air inlet (9) opens, said at least one cavity overflowing the contour (16) of said grille (11) so as to define said passage (15).

2. Appliance (1) according to claim 1, wherein the passage (15) is provided at least between lateral sides (11a, 11b) of the grille (11) of the air outlet (10) and the outer wall (3).

3. Appliance (1) according to any one of claims 1 or 2, wherein the passage (15) is provided at least between a lower side (11c) of the grille (11) of the air outlet (10) and the outer wall (3).

4. Appliance (1) according to any one of claims 1 to 3, wherein the grille (11) comprises deflectors (17) oriented so as to evacuate the air outside of the casing (2) along a trajectory inclined upwards.

5. Appliance (1) according to any one of claims 1 to 4, wherein the grille (11) has a parallelogram, preferably rectangular shape.

6. Appliance (1) according to any one of claims 1 to 5, wherein the casing (2) comprises a rear wall (3a) on which the air inlet (9) and the air outlet (10) are arranged.

7. Appliance (1) according to any one of claims 1 to 6, wherein the grille (11) is made of a material which is resistant to high temperature, preferably steel.
